# EUROPEAN PATENT APPLICATION

(11) **EP 1 833 213 A1**
(43) Date of publication of application: **12.09.2007**
(21) Application number: 06110826.2
(22) Date of filing: 08.03.2006
(51) Int. Cl.: H04L 12/58

(54) **Method and system for email notification using auto-forwarding and a lightweight mail notification sender**

(71) Applicant: Research In Motion Limited, Waterloo, Ontario N2L 3W8 (CA)
(72) Inventor: Reddy, Raymond, Kitchener,N2M 5G9 (CA); Gorty, Suryanarayana Murthy, Redmond,, WA 98053 (US); McCarthy, Steven J., Bellevue,, WA 98005 (US); Hanson, David J., Snoqualmie,, WA 98065 (US)
(74) Representative: Rickard, David John

(57) **Abstract**

There is provided a method and system for notifying of new email received at a user's mailbox on a mail storage system. A mail processing system, integrated with the mail storage system, is configured to receive new email auto-forwarded from the mail storage system and to define and send a notification email to a mail notification receiver.

## Description

The present application relates to email notification and more particularly a method and system for email notification using auto-forwarding and a lightweight mail notification sender.

Electronic data communications, particularly electronic mail (email), is increasingly prevalent for both business and personal uses. Email services may be offered to users by Internet Service Providers (ISPs). Such businesses host a user's email account providing the user with a mailbox and a user interface with which to send and receive email. Many email users desire to have email communication capabilities available to them on a round-the-clock basis and at their finger tips. Users with handheld data communication devices often desire to use their ISP-hosted email services through their handheld devices such as cellular phones, personal data assistants (PDA) and the like having email capabilities to allow the users to have quick access to messages and remain connected to others.

A mail notification receiver alerts a mail retrieval system when new incoming electronic mail arrives in the user's ISP mailbox. Once the mail retrieval system is alerted of the presence of new mail, it will then automatically retrieve the new mail from the user's mailbox and send it off to the user's device where the mail can be read (e.g. handheld or desktop). Many mail retrieval systems are implemented using a polling approach where the mail retrieval system periodically requests new electronic mail from a user's ISP mailbox. This method of mail retrieval has several disadvantages. Under a polling system, the user is only notified that new electronic mail has arrived after the mail retrieval system has made a polling request and not necessarily when the mail in fact arrives in the user's mailbox. Consequently, the receipt of the electronic mail suffers from a time delay by an amount determined by a preset polling interval (the period between requests to see if new mail has arrived in the user's mailbox). Another difficulty is that where the user has several mailboxes, the mail retrieval system must poll each mailbox separately. This too is time consuming and resource intensive, requiring communication between the mail retrieval system and multiple ISP mail storage servers.

An alternative approach involves building and integrating a dedicated notification server [or application] into the ISP's current architecture. The notification server may poll more efficiently and at more frequent intervals, detect incoming mail when it reaches the mail storage server and before it reaches a user's mailbox, scan data buffers for new incoming mail, or detect new mail as it is being directed to a user's mailbox. However, implementation of such an alternative approach requires a significant amount of resources that the ISP may be unable or unwilling to pay.

A solution which addresses one or more of these issues is therefore desired.

There is preferably provided a method and system for email notification using auto-forwarding and a lightweight mail notification sender. The present solution preferably employs a non-polling approach. Instead of a mail retrieval program on the user end periodically making requests to see if new mail has arrived at a remote mailbox, in one aspect, the present solution may provide a method of automatically triggering a mail retrieval system to fetch a user's new mail in response to a notice announcing the arrival of the new mail in the user's mailbox.

In accordance with one aspect, there is preferably provided a method of providing mail notification of new email received at a user's mailbox stored by a mail storage system. The method comprises integrating a mail processing system with the mail storage system, said mail processing system configured to receive said new email auto-forwarded from the mail storage system and to define and send a notification email to a mail notification receiver.

The method may further comprise the steps of: including a mail listener module within said mail processing system configured to receive said new email from said mail storage system; including a mail processing module within said mail processing system configured to define the notification in response to the new email, using at least some of the content of the new email; or including a mail sender module within said mail processing system configured to send said notification email. The mail processing module may be configured to, at least one of: reformat at least some header fields of said new email to define the header fields of the notification email; delete a message body of said new email to define a message body of the notification email; and insert new header fields into said new email.

The method may further comprise steps to: include a subscription agent module cooperating with said mail processing system, said subscription agent module configured to maintain subscriptions to enable and disable mail notification and wherein the mail processing system operates in response to said subscriptions; and include a subscription manager module cooperating with said mail notification receiver or a mail retrieval system, said subscription manager module configured to communicate with a subscription agent module to enable and disable mail notification.

In accordance with the method, the mail storage system may be configured to auto-forward the new email to the mail processing system. Further, in one embodiment, the method comprises the step of co-locating the mail processing system with the mail storage system at an ISP facility hosting the mail storage system.

In another aspect, there is preferably provided a method of retrieving new email received at a user's mailbox stored by a mail storage system. The method comprises integrating a mail notification receiver with a mail retrieval system, said mail notification receiver configured to trigger said mail retrieval system to retrieve said new email when said mail notification receiver receives a notification email sent in response to said new email arriving in said user's mailbox.

System and computer media aspects will also be apparent those of ordinary skill in the art.

### BRIEF DESCRIPTION OF THE DRAWINGS

In order that the subject matter may be readily understood, embodiments are illustrated by way of examples in the accompanying drawings, in which:

Figure 1 is a block diagram which illustrates pertinent components of an example mail notification system in accordance with one embodiment, implementing auto-forwarding and a lightweight mail notification sender;

Figure 2 is a detailed diagram of the lightweight mail notification sender of Figure 1; and

Figure 3 is a flowchart showing operations for retrieving new email utilizing the non-polling mail notification receiver illustrated in Figure 1;

Figure 4 is a block diagram which illustrates a mail notification system in accordance with another embodiment incorporating a subscription system;

Figure 5 is a detailed diagram of the lightweight mail notification sender of Figure 4; and

Figure 6 is a flowchart showing operations for retrieving new email utilizing the non-polling mail notification receiver illustrated in Figure 4.

### DESCRIPTION OF PREFERRRED EMBODIMENTS

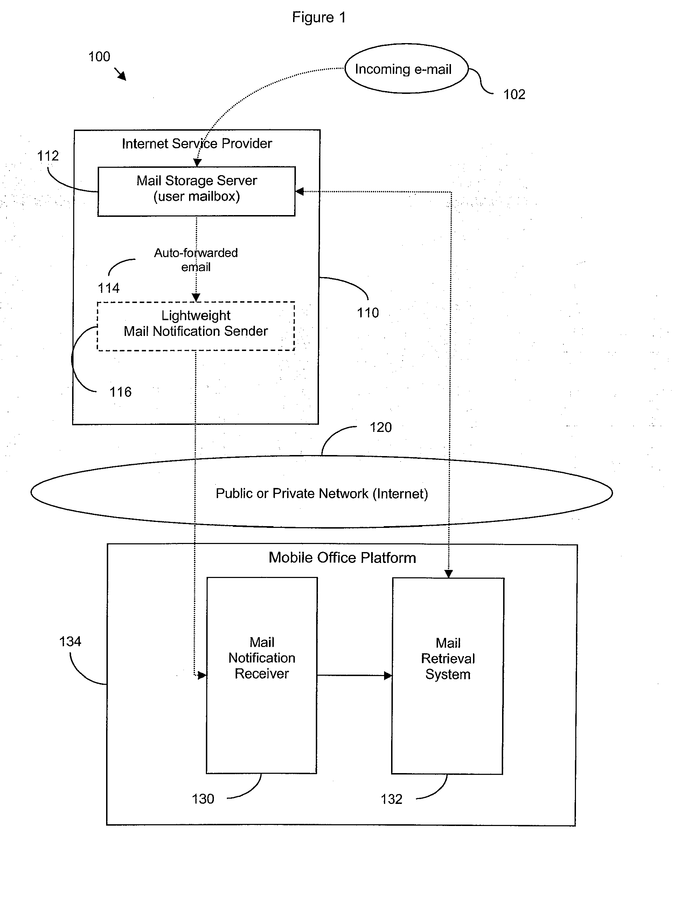

Figure 1 is a block diagram showing components of a non-polling mail notification system 100 in accordance with an embodiment. Briefly, a lightweight mail notification sender is employed to receive auto-forwarded email from a user's ISP mail storage server to define an email-based notification for communication to a mail notification receiver.

Persons of ordinary skill in the art will appreciate that teachings herein are applicable to mail storage servers with auto-forwarding capability and though a separate lightweight mail notification sender is discussed in the examples, no limitations should be imposed as the functions of the lightweight mail notification sender can be incorporated into an existing mail storage server. As well, the lightweight mail notification sender may be co-located at an ISP hosting facility hosting the mail storage server.

System 100 comprises ISP-based components 110 coupled for communication to a public or private network such as the Internet 120 for communicating to a mobile office platform 134 comprising a mail notification server 130 and a mail retrieval system 132. Email notifications are communicated to the mail notification receiver 130 which then communicates with the mail retrieval system 132 to pull email from the ISP. ISP-based components comprise a mail storage server 112 for receiving new user email and storing the new email in user mailboxes and a lightweight mail notification sender 116 coupled for data communication to the storage server 112 to receive auto-forwarded email 114 and process same as described further below.

Mail storage server 112 may comprise commonly available hardware and software such as a network-enabled computer with one or more mail server applications (e.g. Microsoft Exchange, Sendmail, Exim, etc.) installed and configured to handle email communications (e.g. Post Office Protocol 3 (POP3) and Simple Mail Transfer Protocol (SMTP)). In accordance with the present embodiment, mail storage server 112 is configured to automatically forward a copy of the new email received at a user's mailbox to the lightweight mail notification sender 116 using an auto-forward feature of the mail storage server software.

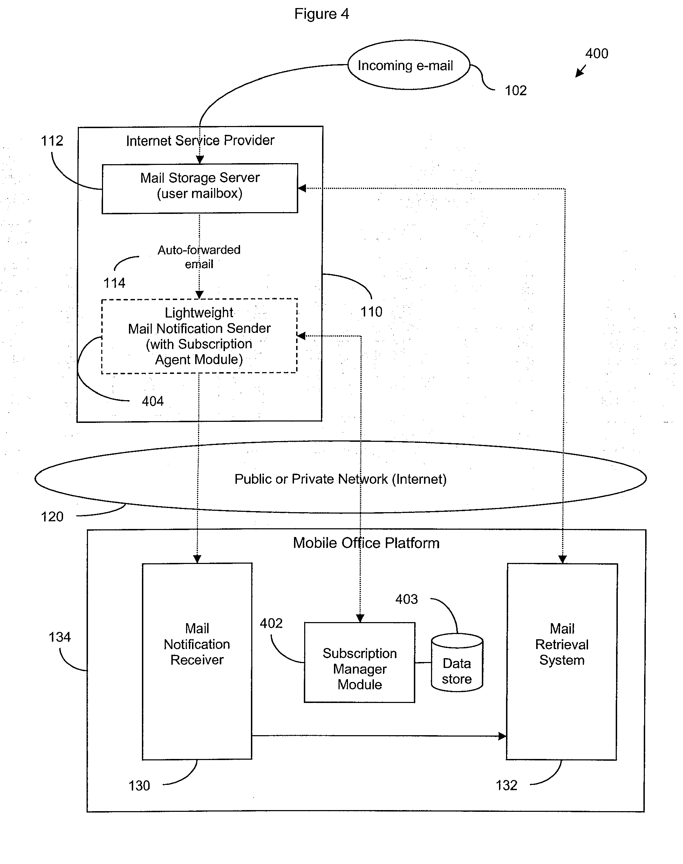

Persons of ordinary skill in the art will appreciate that teachings herein are applicable to mail storage servers with auto-forwarding capability and though a mail storage server configured with the auto-forward feature enabled is discussed in the examples, no limitations should be imposed. A subscription system may be used to enable or disable the auto-forward feature in relation to a user's mailbox on the mail storage server. A subscription system is illustrated in Figures 4, 5, and 6 and will be described in further detail below.

Lightweight mail notification sender 116 may comprise commonly available hardware and software, such as a network-enabled computer with a mail server application (e.g. Microsoft Exchange, Sendmail, Exim, etc.) installed and configured to handle email communications over SMTP, with which to define a server for receiving email 114 and for processing the email to define a notification-based email for communication to mail notification receiver 130.

Persons of ordinary skill in the art will appreciate that teachings herein are applicable to lightweight mail notification senders that have the ability to transmit email communications to a public or private network, and though a lightweight mail notification sender that is configured to handle email communications over SMTP is discussed in the examples, no limitations should be imposed as other protocols for transmitting email communications to a public or private network may be used such as Hypertext Transfer Protocol (HTTP) POST.

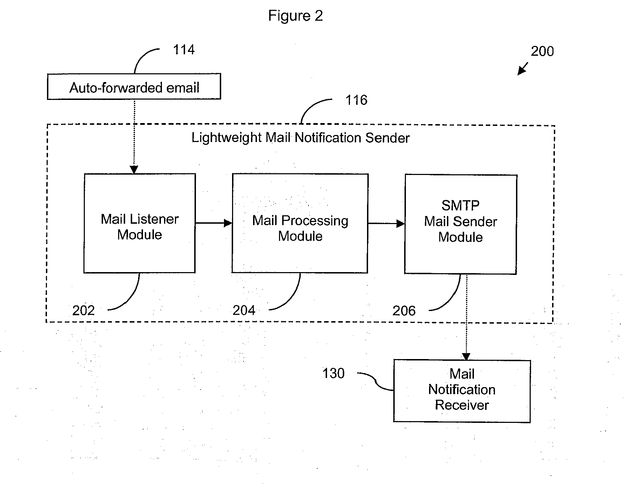

Figure 2 is a block diagram showing further detail of the lightweight mail notification sender 116 of Figure 1. The lightweight mail notification sender 116 comprises a mail listener module 202, a mail processing module 204, and a SMTP mail sender module 206.

Mail listener module 202 may comprise commonly available software configured to receive email and to direct said email to mail processing module 204.

Mail processing module 204 comprises instructions and data (e.g. PHP (Personal Home Page tools) or other language) to receive email from mail listener module 202, reformat header information of the email in accordance with a specification, delete body information (i.e. main text and any attachments of the email) from the email, and direct a resulting processed notification email to SMTP mail sender module 206. When reformatting the header information of the email, header fields may be changed or deleted and new header fields may be inserted.

For example, mail processing module 204 may add additional headers to include data provided with the subscription request and the subscription identifier. As another example, it may change the mail "TO" header to include only the e-mail address of the user, removing other recipient addresses. Here is an example of SMTP transaction from the Mail Notification Sender:
MAIL FROM: *<notification sender e-mail address>*
RCPT TO: *<call-back address in subscription>*
   DATA
X-Subscription-Id: *< subscription-id for a specific subscription>*
X-Notification-Info: *<data provided by subscription manager in subscription>*

Since only a minimal amount of data is required to notify of the presence of a new message, transferring an entire auto-forwarded email to a remote notification service would be inefficient, use excessive bandwidth, and pose privacy concerns when dealing with third-party providers. Not including the data of the body of the message in the notification email and using only minimal header information addresses these concerns.

SMTP mail sender module 206 may comprise commonly available software, such as a mail server application (e.g. Microsoft Exchange, Sendmail, Exim, etc.) configured to handle email communications over Simple Mail Transfer Protocol (SMTP), to send processed email from mail processing module 204 to a public or private network such as the Internet 120 for communication to a mail notification receiver 130.

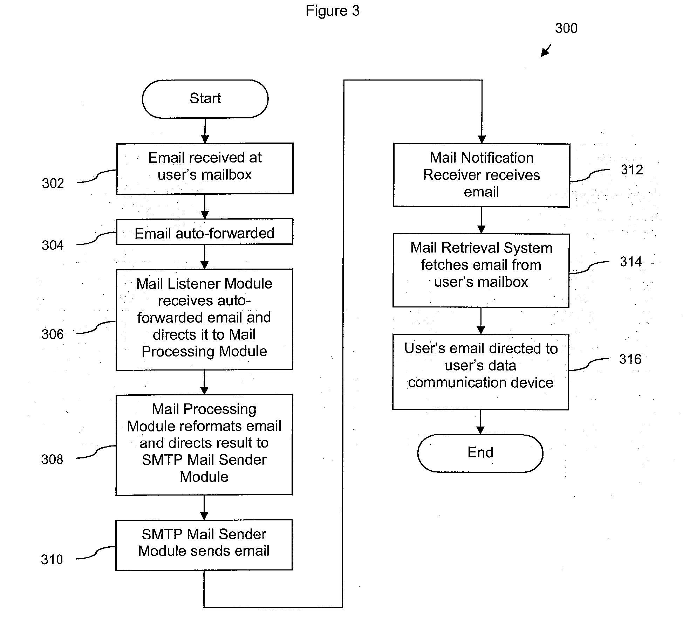

Figure 3 is a flowchart showing operations for retrieving email utilizing a non-polling mail notification system illustrated by mail notification system 100. At step 302, new email is received by the user's ISP and is directed to the user's mailbox on the ISP's mail storage server (e.g. 112). At step 304, a copy of the new email is auto-forwarded (e.g. 114) from the mail storage server to the ISP's lightweight mail notification sender (e.g. 116).

At step 306, the mail listener module (e.g. 202) of the lightweight mail notification sender receives the auto-forwarded email and directs it to the server's mail processing module (e.g. 204). At step 308, the mail processing module reformats the header fields of the email in accordance with a specification. The mail processing module also deletes the body information (i.e. main text and attachments of the email) from the email. At this point, the resulting email is the notification email. The notification email is sent from the mail processing module to the server's SMTP mail sender module (e.g. 206). At step 310, the SMTP mail sender module transmits the notification email over the public or private network (e.g. the Internet, 120) to the mail notification receiver (e.g. 130).

The mail notification receiver and the mail retrieval system (e.g. 132) are collectively responsible for retrieving the user's email and sending it to the user's data communication device (e.g. desktop and/or handheld device). At step 312, the mail notification receiver receives the notification email from the SMTP mail sender module and triggers the mail retrieval system. At step 314, the mail retrieval system initiates a mail fetch cycle, retrieving email from the user's mailbox on the ISP mail storage server. This mail fetch cycle may retrieve email for other users whose mailbox is located on the same ISP mail storage server as the user in question and may also retrieve multiple emails from a user's mailbox, despite the mail notification receiver only receiving a single mail notification email. Also, the mail notification sender or the mail notification receiver may attempt to collapse multiple notifications for a specific user into a single notification so that only one mail fetch cycle is used. At step 316, once the mail is retrieved, it is directed to the user's data communication device.

Advantageously, a mail notification receiver may be configured using an out-of-the-box solution operable with any mail storage server that provides auto-forwarding capability. A notification mechanism may be implemented into the mail service provider's (e.g. ISP) mail infrastructure utilizing the mail storage server's auto-forwarding functionality to send real time notifications. The mechanism may comprise an out of the box mail server with minimal script programming to reformat auto-forwarded emails to define notification emails. Accordingly, a mail service provider can leverage existing mail server functionality and invest minimal resources for implementation.

Figure 4 is a block diagram showing components of a non-polling mail notification system 400 incorporating a subscription system in accordance with an embodiment. Briefly, the subscription system may be in the form of automatic subscriptions used by the mobile office platform 134 to enable or disable notifications of new email received at a user's mailbox.

Persons of ordinary skill in the art will appreciate that teachings herein are applicable to non-polling mail notification systems that have the ability to enable or disable notifications of new mail received at a user's mailbox, and though a subscription system that enables or disables notifications automatically in response to user actions is discussed in the examples, no limitations should be imposed as the subscription system may be in the form of a user interface provided by the user's ISP for the user to manually enable or disable notifications of new email received at a user's mailbox.

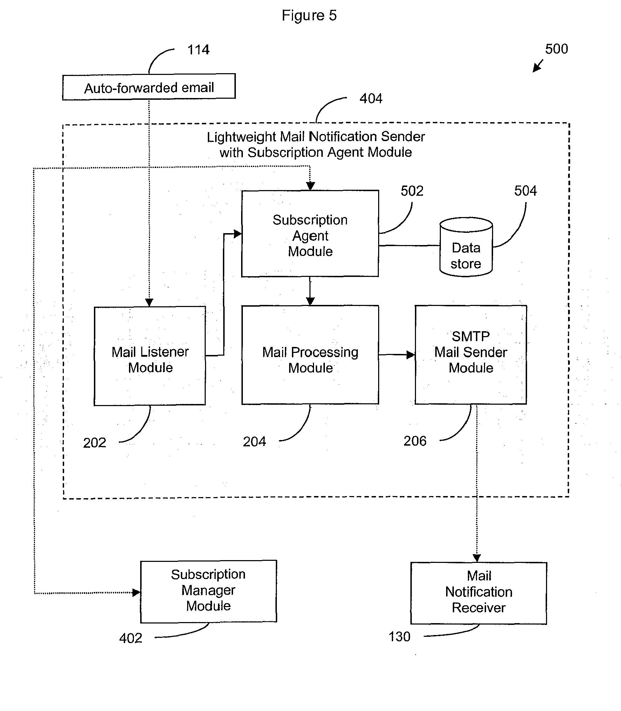

While an ISP has mailboxes for many users, mail notification receiver 130 and mail retrieval system 132 may only need to receive notifications for a subset of those users. The subscription system is responsible for tracking this subset of users. The subscription system comprises a subscription manager module 402 and a subscription agent module 502 (see Figure 5).

Subscription manager module 402 may comprise a simple data store 403 that keeps track of subscription identifiers. Subscription manager module 402 may be used in conjunction with mail notification receiver 130 and mail retrieval system 132 to enable or disable notifications automatically as necessitated by user actions such as creation or deletion of ISP mailboxes. Subscription manager module 402 monitors user actions and sends subscription messages to subscription agent module 502. Subscription agent module 502 maintains a data store of subscriptions and uses it to decide which incoming emails are automatically passed to mail notification receiver 130.

Figure 5 is a block diagram showing further detail of lightweight mail notification sender 404 of Figure 4. Lightweight mail notification sender 404 comprises mail listener module 202, subscription agent module 502 and data store 504, mail processing module 204, and SMTP mail sender module 206.

Subscription agent module 502 may use a simple data store 504 that keeps track of the users that are to receive notifications. When new mail notifications are desired for a user, subscription manager module 402 issues a subscription request to subscription agent module 502. Subscription agent module 502 establishes the subscription and stores the subscription details in its data store 504. Subscription agent module 502 may then generate an identifier for the subscription and send it back to subscription manager module 402. Subscription manager module 402 stores the subscription identifier in its own data store 403 to be used to disable notifications when notifications are no longer desired.

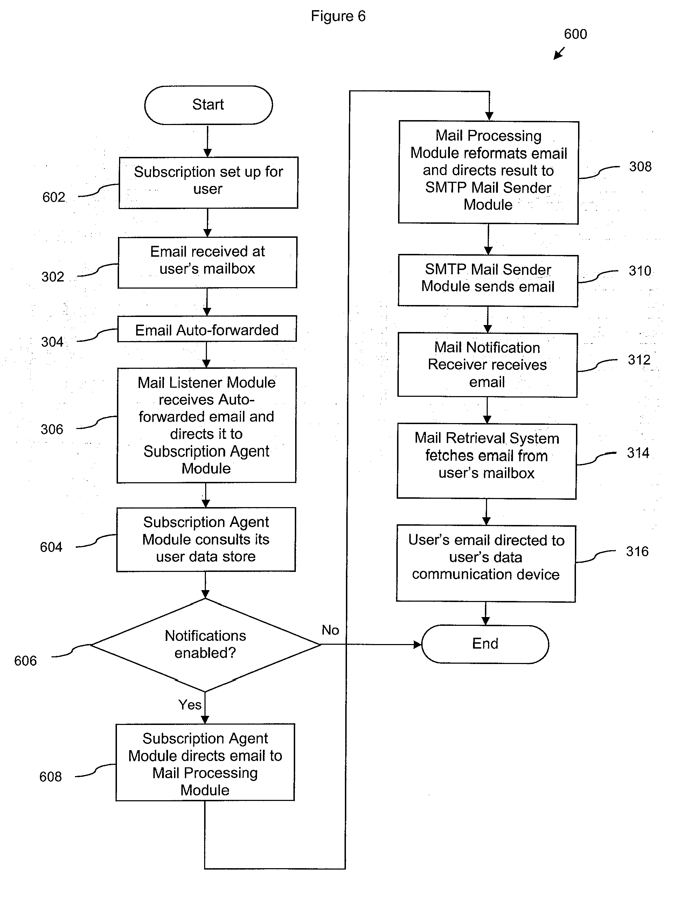

Figure 6 is a flowchart showing operations for retrieving email utilizing a non-polling mail notification system incorporating a subscription system illustrated by mail notification system 400. The operations are similar to those shown in Figure 3, except for subscription set up at step 602 and a subscription verification phase starting at step 604. At step 602, the subscription agent module (e.g. 502) receives a subscription message from the subscription manager module (e.g. 402) for a user, establishes a subscription for that user, and provides a result to the subscription manager module. At step 604, an auto-forwarded mail is received by the subscription agent module from the mail listener module (e.g. 202). The subscription agent module determines if a notification is to be forwarded to the mail notification receiver (e.g. 130) by looking at its data store (e.g. 504) of users to see if the email recipient (i.e. the user) has notifications enabled. As illustrated in step 606, if the user does not have notifications enabled, no notification email will be sent and the process will immediately end. If the user does have notifications enabled, the process will proceed. At step 608, the subscription agent module directs the pre-processed email to the mail processing module (e.g. 204) for reformatting of the email in accordance with a specification. The remaining steps of 308 to 316 are similar to those illustrated in Figure 3.

When a subscription is saved in data store 504 by subscription agent module 502 at mail notification sender 404, additional configuration information may be stored with it. One example is the email address to which the notification email will be eventually sent by SMTP mail sender module 206. Also, the subscription manager module 402 may provide some data to be provided with each notification and this may be stored as part of the configuration information. For example, subscription manager module 402 may send the user's data communication device identifier (e.g. device number for handheld or IP address for desktop) as part of this data. This data is in turn provided with each notification and can serve to identify a specific device to which mail retrieval system 132 delivers mail.

Persons of ordinary skill in the art will appreciate that teachings herein are applicable to lightweight mail notification senders that have the ability to communicate with a subscription manager module, and though a separate subscription agent module is discussed in the examples, no limitations should be imposed as the functions of the subscription agent module can be incorporated into the mail processing module. Additionally, the functions of the subscription agent module can be incorporated into the mail storage server to enable or disable auto-forwarding directly at the mail storage server in order to save on bandwidth usage between the mail storage server and the mail notification sender. For instance, when notifications are no longer needed for a particular user, the subscription agent module will disable auto-forwarding at the mail storage server for that user.

Although preferred embodiments of the invention have been described herein, it will be understood by those skilled in the art that variations may be made thereto without departing from the spirit of the invention or the scope of the appended claims.

## Claims

1. A method of providing mail notification of a new email received at a user's mailbox stored by a mail storage system, the method comprising:
integrating a mail processing system with the mail storage system, said mail processing system configured to receive the new email auto-forwarded from the mail storage system and to define and send a notification email to a mail notification receiver.

2. The method according to claim 1 comprising the step of comprising a mail listener module within said mail processing system configured to receive the new email from said mail storage system.

3. The method according to claim 1 or claim 2 comprising the step of comprising a mail processing module within said mail processing system configured to define the notification email in response to the new email and using at least some of the content of the new email.

4. The method according to claim 3 wherein the mail processing module is configured to perform any one or a combination of:
reformat at least some header fields of the new email to define the header fields of the notification email;
delete a message body of said new email to define a message body of the notification email; and/or
insert new header fields into said notification email.

5. The method according to any preceding claim comprising the step of comprising a mail sender module within said mail processing system configured to send the notification email.

6. The method according to any preceding claim comprising the step of comprising a subscription agent module cooperating with said mail processing system, said subscription agent module configured to maintain subscriptions to enable and disable mail notification and wherein the mail processing system operates in response to said subscriptions.

7. The method according to any preceding claim comprising the step of comprising a subscription manager module cooperating with said mail notification receiver or a mail retrieval system, said subscription manager module configured to communicate with a subscription agent module to enable or disable mail notification.

8. The method according to any preceding claim comprising the step of configuring said mail storage system to auto-forward said new email to said mail processing system.

9. The method according to any preceding claim comprising the step of co-locating the mail processing system with the mail storage system at an ISP facility hosting the mail storage system.

10. A method of retrieving new email received at a user's mailbox stored by a mail storage system, the method comprising:
integrating a mail notification receiver with a mail retrieval system, said mail notification receiver configured to trigger said mail retrieval system to retrieve said new email when said mail notification receiver receives a notification email sent in response to said new email arriving in said user's mailbox.

11. A mail processing system for providing mail notification of new email received at a user's mailbox stored by a mail storage system, the mail processing system comprising:
a communications interface for communicating email; and
a processor and a memory storing instructions and data to configure the mail processing system to receive said new email auto-forwarded from the mail storage system and to define and send a notification email to a mail notification receiver using at least some of the content of the new email.

12. The system according to claim 11, wherein said mail processing system comprises any one or a combination of:
a mail listener module for receiving email from said mail storage system and for redirecting said new email to a mail processing module;
a mail processing module for defining the notification email in response to the new email and using at least some of the content of the new email; and/or
a mail sender module configured for sending the notification email.

13. The system according to claim 12, wherein said mail processing system is arranged to cooperate with a subscription agent module for maintaining subscriptions for mail notification, said mail processing module and mail sender module being arranged to operate in response to said subscriptions.

14. The system according to claim 13 wherein said mail notification receiver or a mail retrieval system is arranged to cooperate with a subscription manager module configured to communicate with the subscription agent module to enable or disable mail notification.

15. The system according to any one of claims 11 to 14 wherein the mail processing system is coupled for email communication with said mail notification receiver configured to receive the notification email and trigger a mail retrieval system configured to retrieve the new email from the mail storage system.

16. The mail processing system according to claim 15 wherein the mail retrieval system is further configured to redirect said new email to a user's data communication device.

17. An email retrieval system for retrieving new email received at a user's mailbox stored by a mail storage system, the system comprising:
means for integrating a mail notification receiver with the mail retrieval system, said mail notification receiver configured to trigger said mail retrieval system to retrieve said new email when said mail notification receiver receives a notification email sent in response to said new email arriving in said user's mailbox.

18. A computer program product having computer readable code embodied therein, for execution by a processor of a computing system, device or apparatus, for providing a notification email of new email received at a user's mailbox stored by a mail storage system, said code configuring the processor to implement the method of any one of claims 1 to 10.

## Amended claims

### Amended claims in accordance with Rule 86(2) EPC.

**1.** A method of providing mail notification of a new email received at a user's mailbox stored by a mail storage system (112), the method comprising:
auto-forwarding the new email from the mail storage system (112) to a mail processing system (116;404); and
sending a notification email automatically to a mail notification receiver (130) in response to the received new email, the notification email triggering the automatic retrieval of said new email.

**2.** The method according to claim 1 further comprising the step of receiving the new email auto-forwarded from the mail storage system (112) at a mail listener module (202) within said mail processing system (116;404).

**3.** The method according to claim 1 or claim 2 further comprising the step of defining the notification email at a mail processing module (204) within said mail processing system (116;404), the notification email defined using at least some of the content of the new email.

**4.** The method according to claim 3, wherein the step of defining a notification email further comprises any one or a combination of:
reformatting at least some header fields of the new email to define the header fields of the notification email;
deleting a message body of said new email to define a message body of the notification email; and/or
inserting new header fields into said notification email.

**5.** The method according to any preceding claim wherein said mail processing system further comprises a mail sender module (206) for sending the notification email.

**6.** The method of claim 5 in which the new email is retrieved directly from the mail storage system.

**7.** The method according to any preceding claim, further comprising the step of:
maintaining subscriptions at a subscription agent module (502) cooperating with said mail processing system; and
enabling and disabling mail notifications at said mail processing system (404), in response to said subscriptions.

**8.** The method according to claim 7 wherein the subscription agent module (502) is coupled to a subscription manager module (402), the subscription manager module (402) for cooperating with said mail notification receiver (130) or a mail retrieval system for receiving a request to enable or disable mail notification and communicate with the subscription agent module (502) to enable or disable mail notification.

**9.** The method according to any preceding claim comprising the step of co-locating the mail processing system (116;404) with the mail storage system (112) at an ISP facility hosting the mail storage system.

**10.** The method of any preceding claim in which the mail notification receiver (130) is part of a mobile office platform.

**11.** A method of retrieving new email received at a user's mailbox stored by a mail storage system (112), the method comprising:
receiving a notification email at a mail notification receiver (130 the notification email sent in response to said new email arriving in said user's mailbox; and
triggering a mail retrieval system (132) to retrieve said new email when the mail notification receiver (130) coupled thereto receives the notification email.

**12.** A mail processing system for providing mail notification of new email received at a user's mailbox stored by a mail storage system (112), the mail processing system comprising:
a communications interface for communicating email; and
a processor and a memory storing instructions and data to configure the mail processing system to receive said new email auto-forwarded from the mail storage system and to define and send a notification email to a mail notification receiver using at least some of the content of the new email.

**13.** The system according to claim 12, wherein said mail processing system comprises any one or a combination of:
a mail listener module (202) for receiving email from said mail storage system and for redirecting said new email to a mail processing module (204);
a mail processing module (204) for defining the notification email in response to the new email and using at least some of the content of the new email; and/or
a mail sender module (206) configured for sending the notification email.

**14.** The system according to claim 13, wherein said mail processing system is arranged to cooperate with a subscription agent module (502) for maintaining subscriptions for mail notification, said mail processing module (204) and mail sender module (206) being arranged to operate in response to said subscriptions.

**15.** The system according to claim 14 wherein said mail notification receiver or a mail retrieval system is arranged to cooperate with a subscription manager module (402) configured to communicate with the subscription agent module 502) to enable or disable mail notification.

**16.** The system according to any one of claims 13 to 15 wherein the mail processing system (116; 404) is coupled for email communication with said mail notification receiver (130) configured to receive the notification email and trigger a mail retrieval system configured to retrieve the new email from the mail storage system (112).

**17.** The mail processing system according to claim 16 wherein the mail retrieval system is further configured to redirect said new email to a user's data communication device.

**18.** An email retrieval system for retrieving new email received at a user's mailbox stored by a mail storage system (112), the system comprising:
a mail notification receiver (130) configured for receiving a notification email, the notification email sent in response to said new email arriving in said user's mailbox; and
a mail retrieval system configured to retrieve said new email when said mail notification receiver coupled thereto receives the notification email.

**19.** A computer program product having computer readable code embodied therein, for execution by a processor of a computing system, device or apparatus, for providing a notification email of new email received at a user's mailbox stored by a mail storage system, said code configuring the processor to implement the method of any one of claims 1 to 11.
